# EUROPEAN PATENT SPECIFICATION

(11) **EP 0 684 194 B1**
(45) Date of publication and mention of the grant of the patent: **12.08.1998**
(21) Application number: 95303418.8
(22) Date of filing: 23.05.1995
(51) Int. Cl.: B65G 47/256

(54) **High-speed positioning parts feeder**
Hochgeschwindigkeits-Zufuhrvorrichtung zum Positionieren von Gegenständen
Dispositif d'alimentation à grande vitesse pour positionner des articles

(30) Priority: 24.05.1994 JP 134953/94
(43) Date of publication of application: 29.11.1995
(73) Proprietor: YUGENKAISHA SHINJO SEISAKUSHO, Nishinariku, Osaka (JP)
(72) Inventor: Shinjo, Hiroshi, Nishinari-ku, Osaka (JP); Takeda, Arata, Kariya, Aichi (JP)
(74) Representative: Purvis, William Michael Cameron

(56) References cited:
- GB-A- 1 235 987
- US-A- 2 505 398
- US-A- 3 221 857

## Description

The invention relates to a high-speed positioning parts feeder according to the preamble of claim 1 (US-A-3 221 857).

Such a feeder can regulate the position of machine parts such as weldable nuts or self-piercing nuts each having an obverse and a reverse and subsequently discharge them at high speed.

Vibrating feeders or rotary-hopper feeders are widely used to supply apparatus with various parts or articles of the same shape and dimension each having an obverse and a reverse. Those parts of the like usually are in random positions in storage and during transportation. Therefore, certain selective devices or mechanism are combined with or installed in the feeders so as to discharge only the parts whose obverses are in a desired position.

Prior art feeders have operated merely to deliver half the parts, thus operating at an efficiency of about 50% of their intrinsic capacity. If the selective mechanism is not so accurate or reliable, then the actual efficiency may be much lower than 50%.

United States Patent No. 3,221,857 discloses a high-speed positioning parts feeder comprising a sorting device, a position regulating device and a converging device.

According to the invention there is provided a high-speed positioning parts feeder comprising a sorting means, a position regulating means and a converging means, wherein
the sorting means is located below an external chute and comprises an inlet path continuing from the chute to receive parts descending due to gravitational force and each having an obverse and a reverse;
a first branch and a second branch which are bifurcated to extend from the inlet path are of different shapes in cross-section so that parts whose front faces are the obverses will advance through the first branch and parts whose back faces are the obverses will advance through the second branch,
the position regulating means is located below the first and second branches so that the sorted parts can individually be spun through an angle to be put into the same orientation while also descending due to the gravitational force,
the converging means is located below the position regulating means and comprises two tributaries through which parts having their obverses put into the same direction will advance concurrently due to gravitational force; and
a barrier and a common discharging path continue from the tributaries and the barrier can open the tributaries alternately;
   characterised in that:
the position regulating means comprises two cylindrical members each having a vertical axis about which the parts are spun and each having secured to an inner periphery thereof a pair of guide lugs disposed at diametrically opposite regions of each cylindrical member to form a circular cylinder about said vertical axis, such that the parts spin through 90 degrees to take the same orientation with respect to their obverses when leaving the cylindrical members.

In such a high-speed positioning parts feeder all of the parts with their obverses positioned random in opposite directions can be caused to take the same position, before being discharged at a high speed, whereby the intrinsic capacity of the feeder as a whole is fully utilized at 100% without any loss.

In operation, parts which have not been arranged to have their obverses directed in the same direction will be supplied to the inlet path of the sorting means. Parts whose front faces are their obverses will enter and descend through for instance the first branch to form a line therein, while the other parts will do so through the second branch to form another line separated from the first line. All the parts thus sorted will then be guided into the position regulating means where they are controlled to have their obverses put into the same direction. Subsequently, the parts will transfer into the discrete tributaries of the converging means, and the barrier installed therein will operate such that the parts descending through one of the tributaries are delivered to the discharging path, while the other parts are held in the other tributary, or vice versa, so as to form a converged continuous line of the parts before they leave this parts feeder.

The invention is diagrammatically illustrated by way of example in the accompanying drawings, in which:
Figure 1 is a front elevation of an embodiment of a high-speed positioning parts feeder according to the invention shown partly in cross-section;
Figure 2 is a perspective view of a sorting device included in the parts feeder of Figure 1;
Figure 3 is an enlarged partial side view of a region included in the sorting device, as seen on line 3-3 in Figure 1;
Figure 4a is a partial side view of another region included in the sorting device, as seen on line 'a'-'a' in Figure 1;
Figure 4b is a cross-section taken on line 'b'-'b' in Figure 1;
Figure 4c is a cross-section taken on line 'c'-'c' in Figure 1;
Figure 5 is a plan view of a position regulating device included in the parts feeder of Figure 1;
Figure 6 is a cross-section taken on line 6-6 in Figure 5;
Figure 7 is a cross-section taken on line 7-7 in Figure 1; and
Figure 8 is a plan view of a converging device also included in the parts feeder of Figure 1 and having portions shown in cross-section.

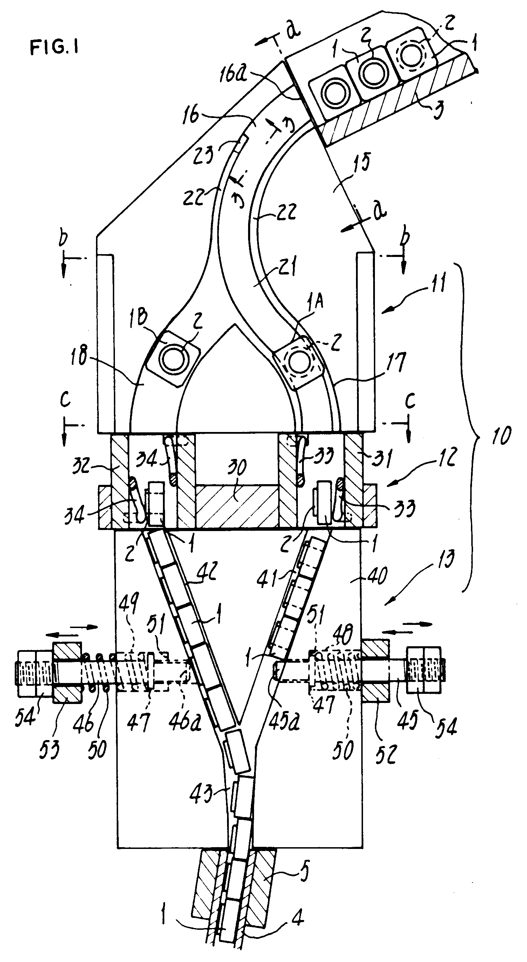

Referring to the drawings, Figure 1 illustrates a high-speed positioning parts feeder 10 constructed to feed self-piercing nuts 1 to an automatic nut fixing apparatus not shown. In such an apparatus, the self-piercing nuts 1 each having a pilot protrusion 2 on their reverses will be secured to a metal plate. The pilot portion 2 can punch a desired portion of a metal plate so as to be secured thereto. An external chute 3 extending from a rotary-hopper feeder or the like (not shown) conveys the nuts 1 into the parts feeder 10. The nuts 1 conveyed through the chute 3 will have their front faces directed randomly, some of the being obverses and the other reverses.

The high-speed positioning parts feeder 10 comprises a sorting device 11, a position regulating device 12 and converging device 13, arranged so as to descend in that order (the term 'device' being meant hereinafter to exemplify the 'means').

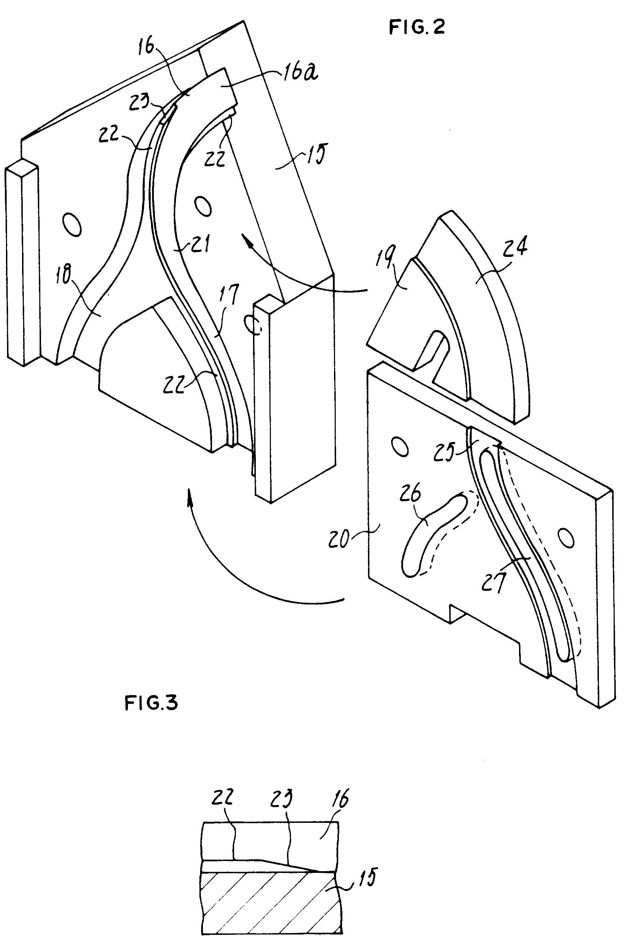

The sorting device 11 is composed of a base plate 15, an upper cover 19 and a lower cover 20, and the covers 19, 20 are attached to a front face of the base plate as seen in Figure 2. an inlet path 16 is a groove in the front face so as to receive the self-piercing nuts 1 continuously fed through the external chute 3. Those nuts will fall or descend along the path 16 due to gravitational force. A first branch 17 and a second branch 18, which also are grooves formed in the base plate 15, form a bifurcate continuing from a lower region of the inlet path 16. The branches 17 and 18 are of different shapes in cross-section, and the first one 17 is of a configuration which can guide downwards only nuts 1A whose front faces are their obverses. On the contrary, the second branch 18 is shaped to guide only nuts 1B having their obverses positioned rearwardly. The grooves defining the path 16 and the branches 17 and 18 are arcuate and so aligned that the nuts 1 can move smoothly through them. A guide recess 21 formed in the bottom of each of the inlet path 16 and the first branch 17 extends the full length of the path and the branch. The nut's pilot protrusion 2 loosely fits in and slides along the guide recess 21. Two parallel and elongate shoulders 22 define between them the guide recess 21. One of the shoulders 22 terminates short of an entrance 16a of the inlet path 16. An upper end of that one of the shoulders 22 is tapered to have its height reduced towards the entrance 16a, so as to provide a gentle slope 23 merging with the bottom of the inlet path 16. This configuration of the inlet path is convenient for all the self-piercing nuts 1, with their obverses randomly facing forwardly or rearwardly when leaving the chute 3, smoothly to transfer into the inlet path 16 through its entrance 16a.

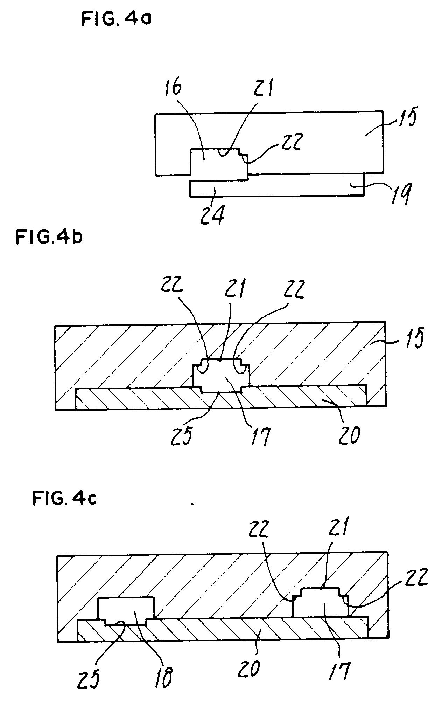

On the other hand, the upper cover 19 has an inner face having a guide recess 24 facing and closing the inlet path 16. As seen in Figure 4a, the pilot protrusion 2 of each reversed nut 1B will be guided along the recess 24 while its obverse slides downwards on the shoulders 22. The lower cover 20 has likewise a further guide recess 25 facing the second branch 18, so that each reversed nut's pilot protrusion 2 will similarly be guided along this recess 25. Elongate windows 26 and 27 are for visual inspection of the nuts 1A and 1B respectively falling through the first and second branches 17 and 18.

The position regulating device 12 mentioned above includes two cylindrical members 31 and 32 held in place by a base plate 30. The base plate 30 is located below the sorting device 11 such that one of the cylindrical members 31 communicates with a lower opening of the first branch 17. Similarly, the other cylindrical member 32 communicates with a lower opening of the second branch 18. A pair of guide lugs 33 secured to an inner periphery of the cylindrical member 31 and facing one another are symmetrical with respect to an axis of this member. Each guide lug 33 extends obliquely the full height of said member. The other cylindrical member 32 is also provided with a pair of similar guide lugs 34.

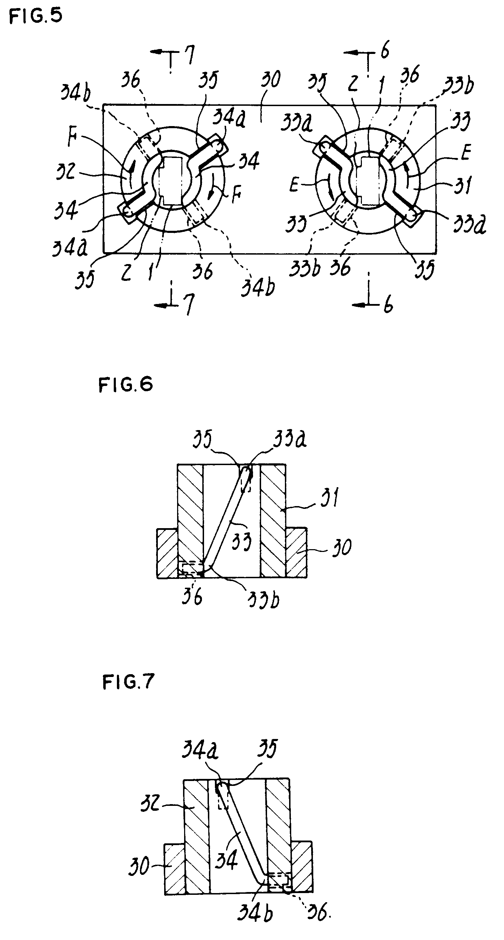

In the illustrated example, each of the guide lugs 33 and 34 is a length of wire bent into the described shape. As seen in Figures 5 to 7, each cylindrical members 31 and 32 has formed in an upper rim thereof a pair of cutouts 35 extending in diametrically opposite directions. A pair of small apertures 36 formed adjacent to a lower rim of said member also extend in diametrically opposite directions, but at an angular shift of 90 degrees from the cutouts 35.

Figures 5 and 6 show that each of the guide lugs 33 has an upper hook 33a fitting in the cutout 35 and a lower ear 33b inserted in the aperture 36. This guide lug 33 extends counterclockwise from its upper end towards its lower end, along the inner periphery. Each self-piercing nut 1A having passed through the first branch 17 and having its pilot protrusion 2 facing upward as viewed in Figure 5 will rotate 90 degrees in a direction 'E' within the cylindrical member 31. Thus, the nut 1A will take its new position where its protrusion 2 faces to the left as indicated by the phantom line, before leaving this cylindrical member 31.

On the other hand, Figures 5 and 7 show that each of other guide lugs 34 has likewise an upper hook 34a fitting in the cutout 35 and a lower ear 34b inserted in the aperture 36. This guide lug extends clockwise from its upper end towards its lower end, along the inner periphery. Each nut 1B having passed through the second branch 17 and having its pilot protrusion 2 facing downward as viewed in Figure 5 will rotate 90 degrees in a direction 'F' within this cylindrical member 32. Thus, the nut 1B will taken its new position where the protrusion 2 faces also to the left as indicated by the phantom line, before leaving this cylindrical member 32. In this way, all the nuts 1A and 1B will take the same, viz. translational, position when discharged from the cylindrical members 31 and 32, notwithstanding the opposite positions with respect to their obverses within the respective branches 17 and 18.

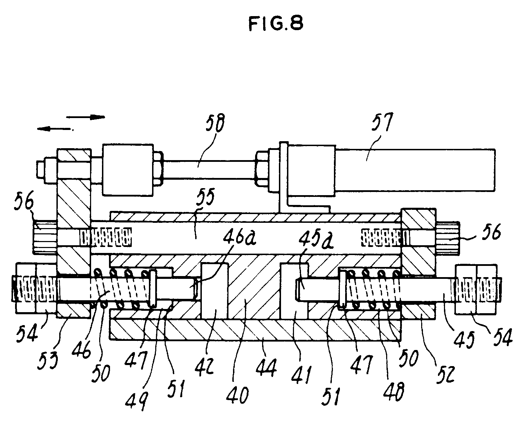

The converging device 13 comprises a first tributary 41 and a second tributary 42. The self-piercing nuts 1 from the cylindrical member 31 will slide downwards through the first tributary 41 due to the gravitational force. The nuts 1 from the other cylindrical member 32 will slide downwards through the first tributary 42 due to gravitational force. The tributaries 41 and 42 merge one with another at a determined height above a bottom of this device and assume a V-shape above that height. The converging lower ends of the tributaries continue to an upright discharging path 43. A front face of a plane body 40 of this device is closed with a dover 44, as shown in Figure 8. A flexible hose chute 4 is connected by a clamp 5 to a lower opening of the discharging path 43, so as to feed the nuts to the automatic fixing apparatus not shown.

A pair of stopping pins 45 and 46 face one another alternately to open and close tributaries 41 and 42. The pins are attached to the base plate 40 and are movable in parallel therewith and relative thereto. Fixed to or formed integral with a middle portion of each pin 45 and 46 is a flange 47. Stepped bores 48 and 49 are aligned with each other slidably to accommodate the stopping pins 45, 46. The bores 48, 49 are formed sideways through the base plate and each extend between, and open at, a side of the base plate 40 and the tributary 41 or 42. A coiled compression spring 50 urges each flange 47 toward a shoulder 51 of the bore 48 or 49. Inner ends 45a and 46a of the stopping pins urged by the compression springs are designed alternately to protrude into the tributaries 41 and 42 and hold in place the nuts 1 which tend to fall along and through the tributaries due to gravitational force.

In detail, actuating arms 52 and 53 loosely fit on outer portions of the pins 45 and 46, which portions are located outside the base plate 40. Inner faces of the arms 52, 53 always bear against outer ends of the springs 50. The outward movement of each arm is limited by a lock nut 54 attached to an outer end of each pin 45 and 46. A slidable tie rod 55 penetrates the base plate 40 transversely thereof, as shown in Figure 8. Bolts 56 secure the actuating arms 52 and 53 to the opposite ends of tie rod 55, whereby the rod 55 can drive the arms in unison with each other. One arm 53 is operatively fixed on a piston rod 58 which extends from a pneumatic cylinder 57 fixed to the back of the base plate 40. In operation, the pneumatic cylinder 57 will directly drive one actuating arm 53 and indirectly the other arm 52 through the tie rod 55. Thus, the stopping pins 45 and 46 can alternately protrude into and be retracted from the first and second tributaries 41 and 42, respectively. The arms 52 and 53 merely act to retract the pins outwards, whilst the compression springs 50 act to push the pins inwards thereby to cause inner ends thereof to protrude into the tributaries. Due to the spring 50 always urging the pin 45 towards the first tributary, the arm 52 on the way to the lock nut 54 will not retract the pin from the tributary, until the arm 52 presses the lock nut 54. Thus, the pin's inner end 45a will be kept in place at the position shown in Figure 8 to continue its function of stopping the nuts 1 while the arm is approaching the lock nut 54. The other arm 53 operating in unison with the first mentioned arm 52 will start, simultaneously therewith, to move in the same direction (e.g., to the right in Figure 8). The other pin's inner end 46a thus protrudes without any delay into the second tributary 42, so as immediately to stop the nuts 1 falling therein also due to gravitational force. Subsequently, the arm 52 will collide with the lock nut 54 thereby to retract the pin 45 against the compression spring 50. It will now be apparent that a certain time lag is provided between the closing of one tributary 41 and the reopening of the other 42. All the nuts located below the stopping pin 46 in the one tributary 41 will transfer to the discharging path 43, before the other tributary 42 is subsequently opened again. The nuts 1 are protected in this way from jamming at the converging point.

In summary, the self-piercing nuts 1 successively supplied through the chute 3 to the nut feeder and having their obverses randomly facing front or rear will descend along the inlet path 16 in the sorting device 11 due to gravitational force. The nuts 1A facing forwardly will engage by their pilot protrusions 2 with the guide groove 21 and pass through the first branch 17, while the other nuts 1B facing rearwardly slide downwards on the shoulders 22 within the inlet path 16, until their pilot protrusions 2 come into engagement with the other guide groove 25 so as to pass through the second branch 18. The nuts 1A and 1B thus sorted will then enter the respective cylindrical members 31 and 32 in the position regulating device 12 so that the guide lugs 33 and 34 causes each of the nuts to take the same orientation, facing for instance to the left as shown in Figure 5 by phantom lines. Two rows of nuts 1 whose positions have been regulated will advance also due to gravitational force through the respective tributaries 41 and 42 in the converging device 13. Since the stopping pins 45 and 46 alternately open and close those tributaries, the nuts in one open tributary will transfer to the discharging path 43 while the other nuts are held in place in the closed other tributary, whereby a united line of the nuts 1 will leave this feeder.

The nuts feeder described above is not limited to use in feeding self-piercing nuts but may be used to feed other articles such as weldable nuts to an automatic welder.

Although nuts facing front and other nuts facing rear are caused in the embodiment to spin 90 degrees in opposite angular directions, if desired only the former or the latter could be caused to spin through 180 degrees, without changing the angular position of the other.

It will now be apparent the feeder provided herein and described above is able to discharge at a high speed those parts which are continuously supplied from a source and have obverses facing front or rear, after quickly regulating their positions such that all the obverses are arranged in the same direction. Therefore, the feeder can work more efficiently than one which comprises the prior art sorter, thus ensuring 100% of its intrinsic capacity, without any loss in operation.

Since only the gravitational force is utilized vertically to transfer the parts, the feeder can be simpler in structure, unlikely to get out of order and thus more reliable in operation.

## Claims

1. A high-speed positioning parts feeder comprising a sorting means (11), a position regulating means (12) and a converging means (13), wherein
the sorting means (11) is located below an external chute (3) and comprises an inlet path (16) continuing from the chute (3) to receive parts (1) descending due to gravitational force and each having an obverse and a reverse;
a first branch (17) and a second branch (18) which are bifurcated to extend from the inlet path (16) are of different shapes in cross-section so that parts (1A) whose front faces are the obverses will advance through the first branch (17) and parts (1B) whose back faces are the obverses will advance through the second branch (18),
the position regulating means (12) is located below the first and second branches (17, 18) so that the sorted parts (1) can individually be spun through an angle to be put into the same orientation while also descending due to the gravitational force,
the converging means (13) is located below the position regulating means (12) and comprises two tributaries (41, 42) through which parts (1) having their obverses put into the same direction will advance concurrently due to gravitational force; and
a barrier (45a, 46a) and a common discharging path (43) continue from the tributaries (41, 42) and the barrier (45a, 46a) can open the tributaries (41, 42) alternately;
characterised in that:
the position regulating means comprises two cylindrical members (31, 32) each having a vertical axis about which the parts are spun and each having secured to an inner periphery thereof a pair of guide lugs (33, 34) disposed at diametrically opposite regions of each cylindrical member (31, 32) to form a circular cylinder about said vertical axis, such that the parts (1A, 1B) spin through 90 degrees to take the same orientation with respect to their obverses when leaving the cylindrical members (31, 32).

2. A high-speed positioning parts feeder according to claim 1, wherein the inlet path (16) and the first and second branches (17, 18) in the sorting means (11) are arcuate grooves formed in a base plate (15) clad with covers (19, 20).

3. A high-speed positioning parts feeder according to claim 1 or claim 2, wherein the barrier (45a, 46a) comprises a pair of stopping pins (45, 46) alternately protruding into and being retracted from the tributaries (41, 42).

## Patentansprüche

1. Hochgeschwindigkeitszuführvorrichtung zum Positionieren von Gegenständen, mit einem Sortiermittel (11), einem Positionsreguliermittel (12) und einem Konvergiermittel (13), wobei
das Sortiermittel (11) unter einer äußeren Rutsche (3) angeordnet ist und eine Einlaßbahn (16) aufweist, die sich von der Rutsche (3) fortsetzt, um Gegenstände (1) aufzunehmen, die infolge Schwerkraft herunterkommen und jeweils eine Vorderseite und eine Rückseite haben;
eine erste Abzweigung (17) und eine zweite Abzweigung (18), die gabelförmig sind, um sich von der Einlaßbahn (16) zu erstrecken, unterschiedliche Querschnittsform haben, so daß Gegenstände (1A), deren Frontseiten die Vorderseiten sind, durch die erste Abzweigung (17) sich vorbewegen und Gegenstände (1B), deren hintere Seiten die Rückseiten sind, sich durch die zweite Abzweigung (18) vorbewegen,
das Positionsreguliermittel (12) unter den ersten und zweiten Abzweigungen (17, 18) angeordnet ist, so daß die sortierten Gegenstände (1) einzeln um einen Winkel gedreht werden können, um in dieselbe Ausrichtung zu kommen, während sie auch infolge Schwerkraft herunterkommen,
das Konvergiermittel (13) unter dem Positionsreguliermittel (12) angeordnet ist und zwei Nebenzweige (41, 42) aufweist, durch welche Gegenstände (1), deren Vorderseiten in dieselbe Richtung gebracht wurden, infolge Schwerkraft zusammenlaufend sich vorbewegen; und
eine Barriere (45a, 46a) und eine gemeinsame Auslaßbahn (43) sich von den Nebenzweigen (41, 42) fortsetzen und die Barriere (45a, 46a) die Nebenzweige (41, 42) abwechselnd öffnen kann;
**dadurch gekennzeichnet, daß:**
das Positionsreguliermittel zwei zylindrische Teile (31, 32) aufweist, deren jedes eine vertikale Achse hat, um welche die Gegenstände gedreht werden und deren jedes an seinem inneren Umfang ein Paar von Führungsnasen (33, 34) befestigt hat, die in diametral entgegengesetzten Bereichen jedes zylindrischen Teils (31, 32) angeordnet sind, um einen kreisförmigen Zylinder um die vertikale Achse zu bilden derart, daß die Gegenstände (1A, 1B) um 90° drehen, um dieselbe Ausrichtung bezüglich ihren Vorderseiten anzunehmen, wenn sie die zylindrischen Teile (31, 32) verlassen.

2. Hochgeschwindigkeitszuführvorrichtung zum Positionieren von Gegenständen nach Anspruch 1, wobei die Einlaßbahn (16) und die ersten und zweiten Abzweigungen (17, 18) in dem Sortiermittel (11) bogenförmige Nuten sind, die in einer Basisplatte (15) gebildet sind, welche mit Abdeckungen (19, 20) verkleidet sind.

3. Hochgeschwindigkeitszuführvorrichtung zum Positionieren von Gegenständen nach Anspruch 1 oder Anspruch 2, wobei die Barriere (45a, 46a) ein Paar von Anschlagstiften (45, 46) aufweist, die abwechselnd in die Nebenzweige (41, 42) hineinragen und aus diesen zurückgezogen werden.

## Revendications

1. Dispositif d'alimentation en pièces à positionnement rapide comprenant un moyen (11) de tri, un moyen (12) de réglage de position et un moyen (13) de convergence, dans lequel :
le moyen (11) de tri est situé au-dessous d'une goulotte externe (3) et comprend un trajet d'entrée (16) prolongeant la goulotte (3) pour recevoir des pièces (1) qui descendent du fait de la force gravitationnelle et comportent chacune un endroit et un envers ;
une première bifurcation (17) et une seconde bifurcation (18), qui bifurquent pour s'étendre depuis le trajet d'entrée (16), ont des formes différentes en section transversale de façon que les pièces (1A), dont les faces avant sont les endroits, avancent dans la première bifurcation (17) et que les pièces (1B), dont les faces arrière sont les endroits, avancent dans la seconde bifurcation (18) ;
le moyen (12) de réglage de position est situé au-dessous des première et seconde bifurcations (17, 18) de façon que les pièces (1) triées puissent être tournées individuellement d'un certain angle pour être placées dans la même orientation tout en descendant également du fait de la force gravitationnelle ;
le moyen (13) de convergence est situé au-dessous du moyen (12) de réglage de position et comprend deux canaux tributaires (41, 42) dans lesquels les pièces (1), dont les endroits sont placés dans la même direction, avancent simultanément du fait de la force gravitationnelle ; et
un dispositif d'arrêt (45a, 46a) et un trajet commun (43) de décharge continu à partir des canaux tributaires (41, 42), et le dispositif d'arrêt (45a, 46a) peut ouvrir, en alternance, les canaux tributaires (41, 42) ;
caractérisé en ce que :
le moyen de réglage de position comprend deux éléments cylindriques (31, 32) comportant chacun un axe vertical autour duquel tournent les pièces et comportant chacun, fixée à sa périphérie interne, une paire d'oreilles (33, 34) de guidage disposées au niveau de régions diamétralement opposées de chaque élément cylindrique (31, 32) pour former un cylindre circulaire autour dudit axe vertical, de façon que les pièces (1A, 1B) tournent de 90 degrés pour prendre la même orientation que leurs endroits lorsqu'elles quittent les éléments cylindriques (31, 32).

2. Dispositif d'alimentation en pièces à positionnement rapide selon la revendication 1, dans lequel le trajet d'entrée (16) et les première et seconde bifurcations (17, 18) du moyen (11) de tri sont des rainures arquées formées dans une plaque de base (15), recouvertes d'éléments de recouvrement (19, 20).

3. Dispositif d'alimentation en pièces à positionnement rapide selon la revendication 1 ou la revendication 2, dans lequel le dispositif d'arrêt (45a, 46a) comprend une paire de broches (45, 46) de butée faisant saillie et se rétractant, en alternance, des canaux secondaires (41, 42).
